# EUROPÄISCHE PATENTSCHRIFT

(11) **EP 0 301 418 B1**
(45) Veröffentlichungstag und Bekanntmachung des Hinweises auf die Patenterteilung: **02.03.1994**
(21) Anmeldenummer: 88111796.4
(22) Anmeldetag: 22.07.1988
(51) Int. Cl.: B62B 1/12

(54) **Mehrzweck-Handkarren**
Multipurpose handcart
Charrette à bras plurifonctionnel

(30) Priorität: 29.07.1987 DE 3725021
(43) Veröffentlichungstag der Anmeldung: 01.02.1989
(73) Patentinhaber: Heinz Kettler Metallwarenfabrik GmbH & Co, D-59469 Ense (DE)
(72) Erfinder: Heinz Kettler Metallwarenfabrik GmbH & Co, D-59469 Ense (DE)
(74) Vertreter: Weber, Joachim, Dr.

(56) Entgegenhaltungen:
- AU-A- 1 890 967
- DE-C- 474 474
- GB-A- 2 051 690
- US-A- 4 565 382

## Beschreibung

Die Erfindung betrifft einen Mehrzweck-Handkarren nach dem Oberbegriff des Hauptanspruchs, mit einem länglichen Rahmen, der aus zwei miteinander verbundenen seitlichen Holmen besteht und am einen Ende zwei Räder sowie eine etwa im rechten Winkel von dem Rahmen abstehende Tragschaufel und am anderen Ende eine Griffanordnung aufweist.

Ein Mehrzweck-Handkarren ist aus der DE-OS 34 19 685 bekannt. Er kann durch Zusammenklappen des Rahmens zur Aufbewahrung verkürzt, aber auch durch Schwenken der Griffanordnung, durch Versetzen der Räder und durch Abschrauben und Umsetzen der Tragschaufel für verschiedene Transportaufgaben umgebaut werden. In einer seiner verschiedenen Umbauformen stellt er einen Sackkarren für den Transport von Säcken, Kartons oder anderen großen rechteckförmigen Gegenständen dar. Nachteilig ist, daß dieser Handkarren aus sehr vielen Teilen besteht, die nur durch Lösen von Schrauben auseinandergenommen werden können und nach dem Zusammensetzen in anderer Anordnung wieder verschraubt werden müssen.

Die US-PS 4,565,382 zeigt eine Kombination eines tragbaren Tisches und eines Handkarrens. Diese Kombination besteht aus einer kastenförmigen Tischplatte, in deren Innenraum zwei miteinander verbundene, scherenförmige Gestelle gelagert sind, wobei am Endbereich eines Gestells zusätzlich Räder angebracht sind. An der Radachse ist schwenkbar eine Tragschaufel gelagert. Die Kombination ist, ähnlich einem Bügeltisch, in einer Tischstellung aufstellbar, wobei die beiden Gestelle auf den Rädern eines Gestells und auf den Endbereichen des anderen Gestells ruhen. Für eine Handkarren-Stellung sind die beiden Gestelle in dem Innenraum der Tischplatte einschiebbar, während die Tragschaufel, über Ketten abgestützt, zur Lastaufnahme dient. Diese Kombination weist für viele Anwendungsfälle den Nachteil auf, daß die Tischplatte sich über die gesamte Länge der Kombination erstreckt, insbesondere in der Handkarren-Stellung, so daß ein Verfahren des Handkarrens mühsam ist. Weiterhin muß die Tischplatte sehr massiv ausgebildet werden, um die Rahmen-Gestelle etc. lagern zu können. Hierdurch erhöht sich das Gesamtgewicht in nicht erwünschter Weise. Die Anordnung und Abstützung der Tragschaufel ist ebenfalls unpraktisch und aufwendig, da die unterschiedlichsten Handgriffe erforderlich sind, um die Tragschaufel in der Handkarren-Stellung in Gebrauch zu nehmen bzw. in der Tischstellung in ihre Ruhestellung zu verschwenken.

Die DE-PS 474 474 beschreibt eine Sackkarre für schwere Lasten, welche zusätzlich mit Stützen versehen ist, welche die Sackkarre in einer schrägen Stellung halten und das Auflegen eines Tisches ermöglichen. Diese Konstruktion ist sehr aufwendig, bedingt eine große Anzahl von Einzelteilen, ist schwierig zu handhaben und zeichnet sich durch ein hohes Gewicht aus.

Aus der AU-A-1,890,967 ist ebenfalls eine Handkarre üblicher Ausgestaltung bekannt, bei welcher ein unterer Teil des Rahmens horizontal aufstellbar ist, um eine horizontale Abstützung eines Gegenstandes, beispielsweise eines Koffers zu ermöglichen. Eine Tischplatte ist dabei nicht vorgesehen.

Die GB-A-2,051,690 zeigt die Kombination einer Handkarre und eines Arbeitstisches, wobei eine ähnliche Ausgestaltung wie bei dem US-Patent 4,565,382 vorgesehen ist. Auch hierbei erstreckt sich das Tischplattenelement über die gesamte Länge dieser Kombination. Am Ende dieses Tischplattenelementes ist eine schwenkbare Verlängerung vorgesehen, welche als Tragschaufel dienen kann. Die beschriebene Ausgestaltung ist nicht sehr stabil und erfordert zudem eine Vielzahl von schwierig zu handhabenden Einzelteilen.

Der Erfindung liegt die Aufgabe zugrunde, einen Mehrzweck-Handkarren zu schaffen, welcher bei einfachem Aufbau und einfacher Handhabbarkeit ein geringes Gewicht aufweist und kostengünstig herstellbar ist und sowohl als Handkarren als auch als Tisch verwendet werden kann.

Die Aufgabe wird durch die Merkmale des Hauptanspruches gelöst. Die Unteransprüche zeigen weitere vorteilhafte Ausgestaltungen der Erfindung.

Diese Aufgabe wird somit, ausgehend von einem Mehrzweck-Handkarren der einleitend bezeichneten Art, dadurch gelöst, daß der Handkarren mittels einer Tischplatte und eines Stützgestells, die an dem Rahmen angebracht sind, in einen Beistelltisch verwandelbar ist. Vorzugsweise ist die Tischplatte und das beispielsweise zweibeinige oder rahmenförmige Stützgestell in dem Rahmen zwischen den Holmen untergebracht, so daß diese Teile bei der Benutzung des Karrens als Sackkarren nicht stören. Zur raumsparenden Aufbewahrung sollte auch die Tragschaufel einklappbar sein.

Eine zweckmäßige konstruktive Anordnung besteht grundsätzlich darin, daß das Stützgestell um eine etwa in halber Höhe verlaufende Querachse an dem Rahmen gelagert und zwischen einer zu den Holmen parallelen und einer die Holme kreuzenden Stellung schwenkbar ist, wobei in der kreuzenden Stellung der auf den Rädern ruhende Rahmen und das Stützgestell oben durch die Tischplatte zusammengehalten werden. Um den Umbau einfach und schnell durchführen zu können, wird vorgeschlagen, daß entweder die Tischplatte an dem Rahmen schwenkbar gelagert und mit dem Stützgestell verbindbar ist oder die Tischplatte an dem Stützgestell schwenkbar gelagert und mit dem Rahmen verbindbar ist. Dazu können an der Tischplatte Haken angebracht sein, welche sich in entsprechende Aufnahmeteile am Gegenstück einhängen oder einrasten lassen.

Eine bevorzugte Ausführungsform besteht darin, daß die Tischplatte mit zu ihren Querkanten parallelen Achsen einerseits an dem Stützgestell schwenkbar gelagert und andererseits an den Holmen längsbeweglich und schwenkbar geführt ist. Zweckmäßigerweise greift die Tischplatte mit in Querrichtung abstehenden runden Zapfen in Nuten an den einander zugewandten Innenseiten der Holme ein. Sie läßt sich somit um die Zapfen schwenken, während die Zapfen in den Nuten wandern. Zur Umwandlung in die Tischfunktion ist also lediglich das Fußgestell in einer Schwenkbewegung von etwa 90° herauszuklappen. Der Rahmen wird zur Stellfläche geneigt und hält zusammen mit dem ihn kreuzenden, in entgegengesetzter Richtung geneigten Stützgestell die Tischplatte waagerecht fest.

Dabei ist die Tischplatte mit dem Rahmen bzw. dem Stützgestell zu verriegeln. Um auch diesen Handgriff einzusparen wird vorgeschlagen, daß die Nuten im oberen Bereich der Holme in die Richtung einer Verlängerung der Tischplatte einlaufen und am Ende kurz nach unten abgewinkelt sind. Die Zapfen an der Tischplatte fallen dann in der Endstellung in die Abwinkelungen ein und bewirken, daß bei Belastung der Tischplatte die oberen Abschnitte des Rahmens und des Fußgestells sich nicht auseinanderbewegen können.

Eine besonders vorteilhafte Weiterbildung der Erfindung besteht darin, daß die - wie schon erwähnt - im Rahmen schwenkbar gelagerte Tragschaufel durch den Rahmen hindurch in eine Stellung umlegbar ist, in welcher sie zu der in Benutzungsstellung befindlichen Tischplatte parallel steht. Dadurch wird unter dem Tisch eine zusätzliche Abstellfläche für Gegenstände geschaffen, die man beim Weiterbewegen des Beistelltisches mitnehmen will.

Am unteren Ende des Stützgestells können kleine Rollen angebracht sein. Zur Höhenverstellung oder ggf. zur Schrägstellung der Tischplatte kann die Schwenkachse des Stützgestells bezüglich des Rahmens oder des Stützgestells wahlweise versetzbar sein, beispielsweise in vorgesehenen Lochreihen.

Ein Ausführungsbeispiel der Erfindung wird nachstehend anhand der Zeichnung erläutert. Im einzelnen zeigt
- Fig. 1: eine Seitenansicht eines Mehrzweck-Handkarrens in der Sackkarren-Stellung,
- Fig. 2: eine Vorderansicht des Handkarrens gem. Fig. 1,
- Fig. 3: eine Seitenansicht des Handkarrens nach Fig. 1 in der Tischstellung und
- Fig. 4: einen Längsschnitt des Handkarrens nach Fig. 1 in größerem Maßstab.

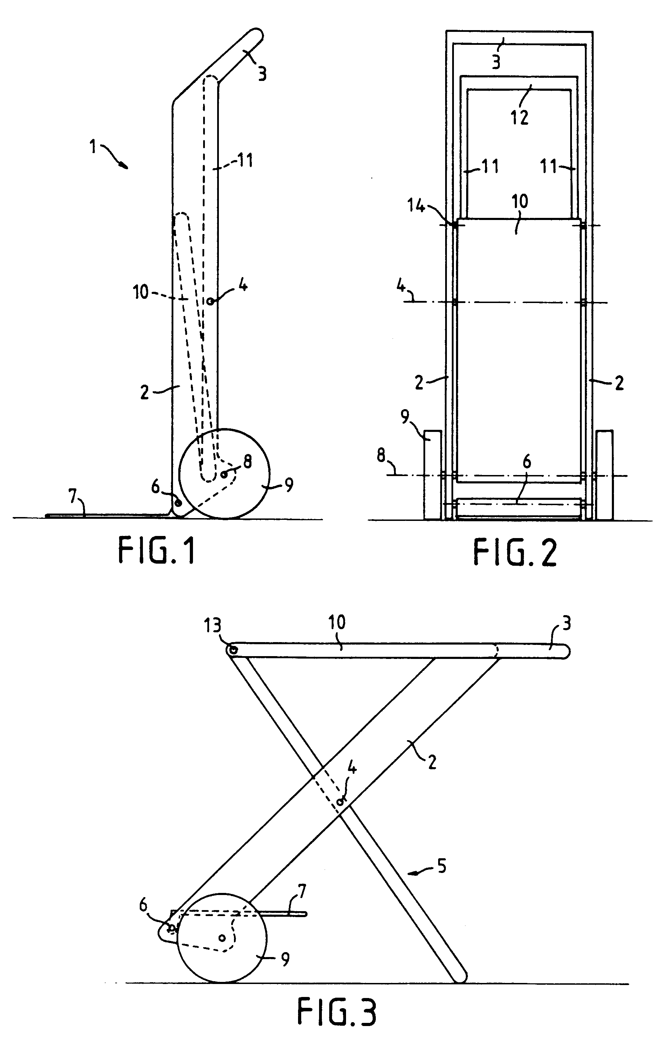

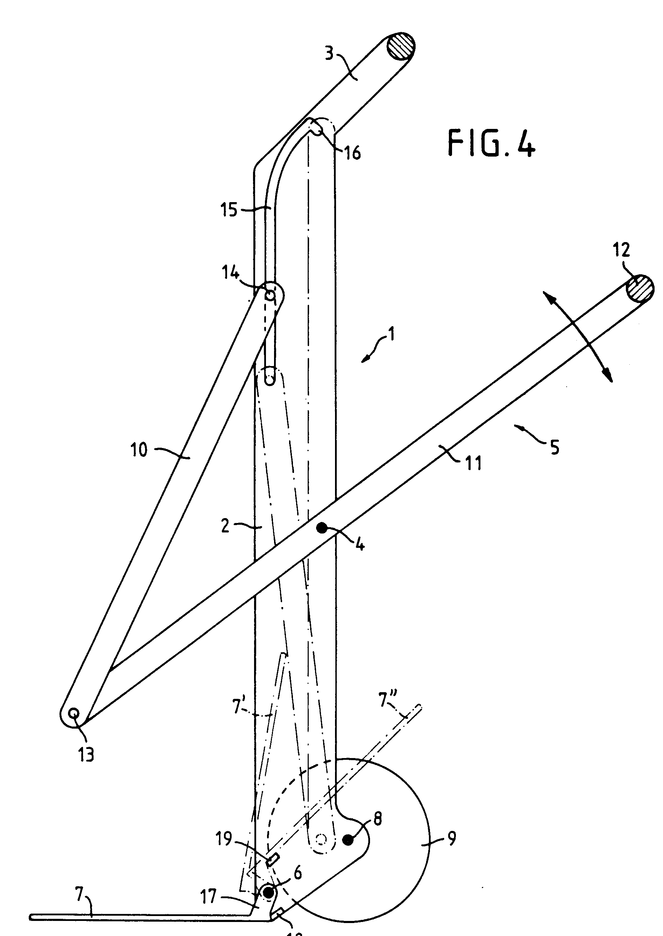

Für seine Funktion als Sackkarren nach den Figuren 1 und 2 umfaßt der Mehrzweck-Handkarren einen Rahmen (1) aus zwei parallelen leistenförmigen Holmen (2), die oben durch einen schrägstehenden Griffbügel (3), im mittleren Bereich durch die Achse (4) eines Stützgestells (5) und im unteren Bereich durch die Achse (6) einer Tragschaufel (7) sowie durch die Achse (8) zweier außen angebrachter Räder (9) miteinander verbunden sind. Eine zwischen die Holme (2) eingesenkte Tischplatte (10) kann als Stützfläche für eine auf der Tragschaufel ruhende Last dienen. Zum Aufbewahren kann die Tragschaufel (7) in die Stellung (7′) gemäß Fig. 4 eingeklappt werden, in welcher sie an der Tischplatte (10) anstößt.

Das um die Achse (4) schwenkbare Stützgestell (5) bildet ebenfalls einen Rahmen aus zwei Schenkeln (11), die an dem nach den Figuren 1 und 2 oberen Ende durch einen Querschenkel (12) zusammengehalten und an den beiden anderen Enden mit der Tischplatte (10) schwenkbar verbunden sind, wobei die Schwenkachse (13) die eine Querkante der Tischplatte bildet. In Verlängerung der gegenüberliegenden Querkante weist die Tischplatte (10) zwei Zapfen (14) auf, welche in Nuten (15) an den Innenflächen der Holme (2) eingreifen (Fig. 4). In ihrem oberen Endbereich verläuft die Nut (15) in einer Kurve nach rechts, wobei sie asymptotisch in die Richtung einschwenkt, die durch den Griffbügel (3) und die Verlängerung des Tisches (10) in seiner Benutzungsstellung nach Fig. 3 vorgegeben ist. Schließlich enden die Nuten in Abwinkelungen nach unten bzw. in Fangtaschen (16).

Um den Sackkarren in einen fahrbaren Beistelltisch zu verwandeln hält man mit einer Hand den Griffbügel (3) und schwenkt mit der anderen das Stützgestell (5), das man an dem Querschenkel (12) hält, aus dem Rahmen (1) heraus, bis es quer zu diesem steht. Dabei werden die Zapfen (14) der Tischplatte unter gleichzeitiger Schwenkung in der Nut (15) nach oben verschoben, bis die Zapfen (14) in die Fangtaschen (16) einfallen. Dann wird die Vorrichtung gemäß Fig. 3 abgestellt. Sie ruht jetzt auf den Rädern (9) und dem Stützgestell (5) und die Tischplatte (10) nimmt eine horizontale Stellung ein und wird durch den ebenfalls horizontalen Griffbügel (3) verlängert. Zum Zusammenklappen wird die Tischplatte (10) an der zapfenseitigen Kante leicht angehoben, so daß die Zapfen (14) die Fangtaschen (16) verlassen, wonach das Stützgestell (5) wieder in seine Ruhestellung nach Fig. 1 zurückgeführt werden kann und die Tischplatte entsprechend nach unten wandert.

Wie insbesondere Fig. 4 zeigt hat die Tragschaufel (7) zwei Lageraugen (17), die ihr einen Abstand von ihrer Achse (6) geben. In der ausgezogen gezeichneten Sackkarrenstellung stoßen diese Lageraugen (17) an Anschlägen (18) an, die fest an den Holmen (2) sitzen. In der strichpunktiert gezeichneten Stellung (7′′) erstreckt sich die Tragschaufel zwischen den Holmen (2) hindurch, wobei sie auf entsprechenden Anschlägen (19) aufliegt. Sie befindet sich jetzt mit der Unterseite nach oben in horizontaler Stellung (Fig. 3) und kann so als weitere Ablagefläche dienen.

## Patentansprüche

1. Mehrzweck-Handkarren, welcher in einen Beistelltisch verwandelbar ist, mit einem äußeren und einem inneren Rahmen (1, 5), welche in ihrem mittleren Bereich um eine horizontale Achse (4) schwenkbar miteinander verbunden sind, mit zwei Rädern (9), welche um eine horizontale Achse (8) drehbar an einem Ende eines Rahmens (1) gelagert sind, mit einer Tischplatte (10), welche mit ihrem einen Endbereich schwenkbar mit dem Endbereich des einen Rahmens (5) und mit ihrem anderen Endbereich verschiebbar mit dem anderen Rahmen (1) verbunden ist, sowie mit einer schwenkbar im Bereich der Achse (8) der Räder (9) gelagerten Tragschaufel (7), dadurch gekennzeichnet, daß der äußere Rahmen (1) als massiver, geschlossener Hauptrahmen ausgebildet ist, welcher sich über die gesamte Länge des Handkarrens erstreckt, in dessen Innenraum der als Stützrahmen ausgebildete innere Rahmen (5) und die Tischplatte (10) angeordnet sind und an dessen oberem Endbereich ein zu dem Rahmen (1) geneigter, in der Tischstellung mit der Tischplatte (10) fluchtender Griffbügel (3) ausgebildet ist und dessen verbreiterter unterer Bereich rückseitig, bezogen auf die Fahrtrichtung, die Achse (8) lagert, während vorderseitig eine horizontale Achse (6) für die Tragschaufel (7) angeordnet ist.

2. Mehrzweck-Handkarren nach Anspruch 1, dadurch gekennzeichnet, daß die Tragschaufel (7) mittels Lageraugen (17) an der Achse (6) gelagert ist und aus einer horizontalen Gebrauchsstellung in eine, in Tischstellung des Handkarrens, ebenfalls horizontale Ruhestellung verschwenkbar ist.

3. Mehrzweck-Handkarren nach Anspruch 2, dadurch gekennzeichnet, daß zur Begrenzung der Gebrauchsstellung und der Ruhestellung der Tragschaufel (7) jeweils Anschläge (18, 19) an dem äußeren Rahmen (1) ausgebildet sind.

4. Mehrzweck-Handkarren nach einem der Ansprüche 1 bis 3, dadurch gekennzeichnet, daß der vorderseitige untere Endbereich des äußeren Rahmens (1) zur Abstützung des äußeren Rahmens (1) in einer im wesentlichen vertikalen Stellung verlängert ausgebildet ist.

5. Mehrzweck-Handkarren nach einem der Ansprüche 1 bis 4, dadurch gekennzeichnet, daß an dem inneren Rahmen (5) Hilfsräder angebracht sind.

6. Mehrzweck-Handkarren nach einem der Ansprüche 1 bis 5, dadurch gekennzeichnet, daß die Tischplatte (10) mit in Querrichtung abstehenden runden Zapfen (14) in Nuten (15) an den einander zugewandten Innenseiten von Holmen (2) des äußeren Rahmens (1) geführt ist.

7. Mehrzweck-Handkarren nach Anspruch 6, dadurch gekennzeichnet, daß sich die Nuten (15) am oberen Bereich der Holme (2) und in einem Bereich des Griffbügels (3) erstrecken.

8. Mehrzweck-Handkarren nach Anspruch 7, dadurch gekennzeichnet, daß die Nuten (15) an ihrem Ende im Bereich des Griffbügels (3) jeweils mit einer nach unten gerichteten Fangtasche (16) versehen sind.

## Claims

1. A multi-purpose hand cart, which can be transformed into a table, having an outer and an inner frame (1, 5), which in their central region can be swivellably connected to one another around a horizontal axis (4), having two wheels (9), which are rotatably fixed around a horizontal axle (8) at one end of a frame (1), having a table top (10), which with one end region is connected in a swivelling manner to the end region of one frame (5) and with its other end region is displaceably connected to the other frame (1), and also having a carrying plate (7) pivoted in the region of the axle (8) of the wheels (9),
**characterised in that** the outer frame (1) is constructed as a solid, closed main frame, which extends over the entire length of the hand cart, in the interior of which the inner frame (5) constructed as a support frame and the desk top (10) are disposed and at the upper end region of which is constructed a handle (3), which is inclined to the frame (1) and aligns with the desk top (10) in the table position, and the widened lower region of which comprises on the rear, in relation to the direction of travel, the axle (8), while a horizontal axis (6) for the carrying plate (7) is disposed on the front side.

2. A multi-purpose hand cart according to Claim 1,
**characterised in that** the carrying plate (7) is mounted by means of bearing lugs (17) on the axis (6) and can be swung out of a horizontal position of use into a table position of the hand cart, also a horizontal position of rest.

3. A multi-purpose hand cart according to Claim 2,
**characterised in that** stops (18, 19) are constructed on the outer frame (1) to limit the position of use and the position of rest of the carrying plate (7).

4. A multi-purpose hand cart according to one of Claims 1 to 3,
**characterised in that** the front, lower end region of the outer frame (1) is extended to support the outer frame (1) in a substantially vertical position.

5. A multi-purpose hand cart according to one of Claims 1 to 4,
**characterised in that** auxiliary wheels are mounted on the inner frame (5).

6. A multi-purpose hand cart according to one of Claims 1 to 5,
**characterised in that** the table top (10) having round journals (14) protruding in the transverse direction is guided in grooves (15) on the facing inner sides of bars (2) of the outer frame (1).

7. A multi-purpose hand cart according to Claim 6,
**characterised in that** the grooves (15) extend at the upper region of the bars (2) and in a region of the handle (3).

8. A multi-purpose hand cart according to Claim 7,
**characterised in that** at their end in the region of the handle (3) the grooves (15) are provided with a downwardly directed catch (16).

## Revendications

1. Charrette à bras plurifonctionnelle pouvant être transformée en desserte, comportant un cadre extérieur et un cadre intérieur (1, 5) qui sont reliés l'un à l'autre, dans leur zone moyenne, de manière pivotante autour d'un axe horizontal (4); deux roues (9) qui sont montées, de manière rotative autour d'un axe horizontal (8), à une extrémité d'un cadre (1); un plateau de table (10) qui est relié de manière pivotante, par l'une de ses parties d'extrémité, à la partie d'extrémité de l'un des cadres (5) et de manière coulissante, par son autre partie d'extrémité, à l'autre cadre (1); ainsi qu'une bavette portante (7) montée de manière pivotante dans la zone de l'axe (8) des roues (9), caractérisée en ce que le cadre extérieur (1) est agencé sous forme de cadre principal fermé plein, qui s'étend sur toute la longueur de la charrette à bras, dans l'espace intérieur duquel sont disposés le cadre intérieur (5) agencé sous forme de cadre de support et le plateau de table (10) et à la partie d'extrémité supérieure duquel est formée une pièce de poignée (3) inclinée vers le cadre (1) et venant à ras du plateau de table (10) en position de desserte, dont la partie inférieure élargie reçoit, du côté arrière par rapport au sens de roulement, l'axe (8), tandis que du côté avant est disposé un axe horizontal (6) pour la bavette portante (7).

2. Charrette à bras plurifonctionnelle suivant la revendication 1, caractérisée en ce que la bavette portante (7) est montée sur l'axe (6) à l'aide d'oeillets de montage (17) et est pivotante d'une position d'utilisation horizontale en une position de repos, également horizontale, en position de desserte de la charrette à bras.

3. Charrette à bras plurifonctionnelle suivant la revendication 2, caractérisée en ce que, sur le cadre extérieur (1), des butées (18, 19) sont agencées pour limiter la position d'utilisation et la position de repos de la bavette portante (7).

4. Charrette à bras plurifonctionnelle suivant l'une des revendications 1 à 3, caractérisée en ce que la partie inférieure du côté avant du cadre extérieur (1) est agencée avec un prolongement afin de soutenir le cadre extérieur (1) en position sensiblement verticale.

5. Charrette à bras plurifonctionnelle suivant l'une des revendications 1 à 4, caractérisée en ce que des roues auxiliaires sont placées sur le cadre intérieur (5).

6. Charrette à bras plurifonctionnelle suivant l'une des revendications 1 à 5, caractérisée en ce que le plateau de table (10) est guidée, par des pivots ronds (14) s'étendant en sens transversal, dans des rainures (15) dans les faces intérieures, orientées l'une vers l'autre, de montants (2) du cadre extérieur (1).

7. Charrette à bras plurifonctionnelle suivant la revendication 6, caractérisée en ce que les rainures (15) s'étendent dans la partie supérieure des montants (2) et dans une partie de la pièce de poignée (3).

8. Charrette à bras plurifonctionnelle suivant la revendication 7, caractérisée en ce que les rainures (15) sont pourvues, chacune, à leur extrémité dans la partie de la pièce de poignée (3), d'une encoche d'arrêt (16) orientée vers le bas.
